# FASCICULE DE BREVET EUROPEEN

(11) **EP 1 902 452 B1**
(45) Date de publication et mention de la délivrance du brevet: **10.08.2011**
(21) Numéro de dépôt: 06778850.5
(22) Date de dépôt: 10.07.2006
(51) Int. Cl.: H01F 41/02, H02K 15/02, H01F 3/02

(54) **PROCEDE DE FABRICATION D'UN CIRCUIT MAGNETIQUE FEUILLETE**
VERFAHREN ZUR HERSTELLUNG EINER MAGNETISCHEN SCHICHTSCHALTUNG
METHOD FOR MAKING A LAMINATED MAGNETIC CIRCUIT

(30) Priorité: 08.07.2005 FR 0507311
(43) Date de publication de la demande: 26.03.2008
(73) Titulaire: CENTRE NATIONAL D'ETUDES SPATIALES, F-75001 Paris (FR); Clix Industries, 31520 Ramonville Saint Agne (FR)
(72) Inventeur: MARTIN, Frédéric, F-31770 Colomiers (FR); CASTERAS, Christophe, René, Jacques, Marie, F-31400 Toulouse (FR)
(74) Mandataire: Colas, Jean-Pierre
(86) Numéro de dépôt international: PCT/FR2006/001680
(87) Numéro de publication internationale: WO 2007/006965

(56) Documents cités:
- DE-A1- 2 151 960
- FR-A- 1 432 280
- FR-A- 2 791 484
- FR-A- 2 850 678
- GB-A- 2 271 219
- JP-A- 61 058 451
- US-A1- 2004 212 269

## Description

La présente invention concerne un procédé de fabrication de circuits magnétiques feuilletés, ainsi qu'un circuit magnétique obtenu par ce procédé.

Un circuit magnétique feuilleté est généralement formé d'un empilage de tôles dont chacune présente la forme d'au moins une partie de la section du circuit magnétique à obtenir, tôles entre lesquelles est interposée une couche d'isolant. Cette couche sert à limiter voire supprimer les courants de Foucault responsables des pertes magnétiques et thermiques dont on connaît bien les inconvénients dans le cas de tels circuits magnétiques.

C'est ainsi par exemple qu'un rotor ou un stator (suivant le type choisi de machine électrique), comprend en général un empilage de tôles minces annulaires en matériau ferromagnétique dans lesquelles sont formées des encoches destinées à recevoir le bobinage. Le périmètre extérieur dans le cas d'un rotor ou le passage central de l'empilement dans le cas d'un stator, dans lesquels s'ouvrent les encoches, sert à recevoir respectivement le stator ou le rotor de la machine.

Pour consolider l'empilage de tôles, il est par ailleurs connu d'utiliser une colle servant en même temps à isoler les tôles entre elles. On peut ainsi obtenir dans l'empilage une bonne isolation électrique et en assurer une cohésion ainsi qu'une rigidité mécanique telles que sa géométrie reste constante (notamment la concentricité et la planéité) tout au long de sa fabrication et de la durée de vie de la machine électrique dans lequel il est incorporé. La cohésion et la rigidité mécanique de l'empilage de tôles permettent en outre d'alléger les structures et par conséquent de réduire le volume de la machine finie en autorisant par exemple la suppression de frette ou de carter sur la machine électrique.

S'il s'agit d'une machine tournante, un défaut de géométrie risque d'entraîner des défauts d'alignement du stator et du rotor qui peuvent provoquer une baisse des performances (surtout au démarrage d'un moteur par exemple) et nécessiter ainsi un surdimensionnement des organes mécaniques de la machine.

Il est donc essentiel que l'usinage des tôles du circuit magnétique feuilleté puisse être effectué avec une grande précision.

On connaît du document US 2005/0089708, qui décrit l'état de la technique la plus proche, un procédé de fabrication d'un circuit magnétique feuilleté selon le préambule de la revendication 1 composé d'un empilage de tôles en un matériau ferromagnétique amorphe, suivant lequel on enduit d'une résine adhésive au moins une face de chacune des tôles, on empile les tôles enduites, on comprime l'empilage ainsi obtenu en faisant durcir l'adhésif par un traitement thermique, et on usine par un procédé électrique l'empilage de tôles.

La présente invention a notamment pour but de fournir un procédé de fabrication d'un circuit magnétique feuilleté permettant d'obtenir un empilage présentant une cohésion et une rigidité telles que l'usinage subséquent n'en provoque aucune délamination et peut être effectué avec une grande précision.

L'invention a donc pour objet un procédé de fabrication d'un circuit magnétique feuilleté selon la revendication 1, que ce soit pour des stators et rotors de machines tournantes (moteurs, alternateurs, génératrices etc.), ou pour des transformateurs, des électro-aimants et autres appareillages analogues, composé d'un empilage de tôles en un matériau ferromagnétique.

Grâce au recours à la sérigraphie pour enduire les tôles avec une couche très mince d'un adhésif d'une viscosité moyenne à haute, on obtient un empilage dans lequel l'adhésif est réparti d'une façon homogène et en une très fine couche de quelques microns, d'où une excellente qualité de collage excluant toute délamination ultérieure de l'empilage.

De plus, ce procédé d'enduction par sérigraphie offre une totale maîtrise de la quantité et donc du volume de colle déposé, permettant ainsi d'exclure tout risque de débordement d'excédent de colle.

De manière surprenante, et contrairement à ce que l'on pensait jusqu'à présent, l'électroérosion n'affecte nullement les couches d'adhésif situées entre les tôles, et permet donc de conserver à la fois une parfaite isolation et une parfaite adhérence de ces couches les unes par rapport aux autres.

En outre, l'usinage par électroérosion permet de supprimer les risques de délamination encourus avec les procédés classiques d'usinage et de diminuer le nombre d'étapes de fabrication.

D'autres caractéristiques du procédé selon l'invention ressortiront des sous revendications.

Suivant l'une de ces caractéristiques, ladite électroérosion est filaire. De la sorte, on peut réaliser un usinage de grande précision.

Suivant encore une autre caractéristique du procédé selon l'invention, préalablement à l'opération d'usinage par électroérosion, les surfaces dudit empilage à usiner sont recouvertes d'une résine conductrice de l'électricité.

Une telle résine permet de relier électriquement entre elles les tôles du circuit magnétique, et ainsi de les placer au même potentiel électrique, ce qui permet une mise en oeuvre très aisée de l'électroérosion.

D'autres caractéristiques de l'invention apparaîtront au cours de la description qui va suivre donnée uniquement à titre d'exemple et faite en se référant aux dessins annexés sur lesquels :
- la figure 1 montre par une vue schématique un appareillage pour enduire une tôle ferromagnétique d'une colle formant isolant ;
- la figure 2 est une vue axiale d'une face d'extrémité d'une ébauche d'empilage statorique après exécution de l'étape d'enduction représentée sur la figure 1 ;
- la figure 3 est une vue en coupe axiale diamétrale de l'ébauche représentée sur la figure 2 ; et
- la figure 4 montre une vue analogue à celle de la figure 2 d'un empilage statorique fini après exécution du procédé de fabrication selon l'invention.

Dans l'ensemble des figures, certaines dimensions, et notamment les épaisseurs de l'adhésif, ont été exagérées pour plus de clarté.

La description qui va suivre d'un mode de mise en oeuvre préféré du procédé de l'invention s'applique à titre d'exemple à la fabrication d'un circuit magnétique feuilleté pour un stator d'une machine tournante telle qu'un moteur électrique. Cependant, l'invention ne se limite pas à de tels stators, mais s'applique à tout circuit magnétique feuilleté, que ce soit pour des stators et rotors de machines tournantes (moteurs alternateurs, générateurs etc.), ou pour des transformateurs, des électro-aimants et autres appareillages analogues.

Selon le mode de mise en oeuvre décrit à titre d'exemple, le procédé consiste tout d'abord à fabriquer des tôles, par exemple par estampage, dans un matériau en feuille ferromagnétique du type Fe-Ni, les tôles présentant chacune une forme générale annulaire circulaire. Leurs dimensions et la nature du matériau dont elles sont constituées sont naturellement choisies en fonction des caractéristiques du stator devant être réalisé.

L'étape suivante du procédé consiste à enduire chaque tôle soit sur une face, soit de préférence sur les deux faces, d'une couche de colle isolante. Selon l'invention, l'enduction est réalisée par sérigraphie à travers un tamis.

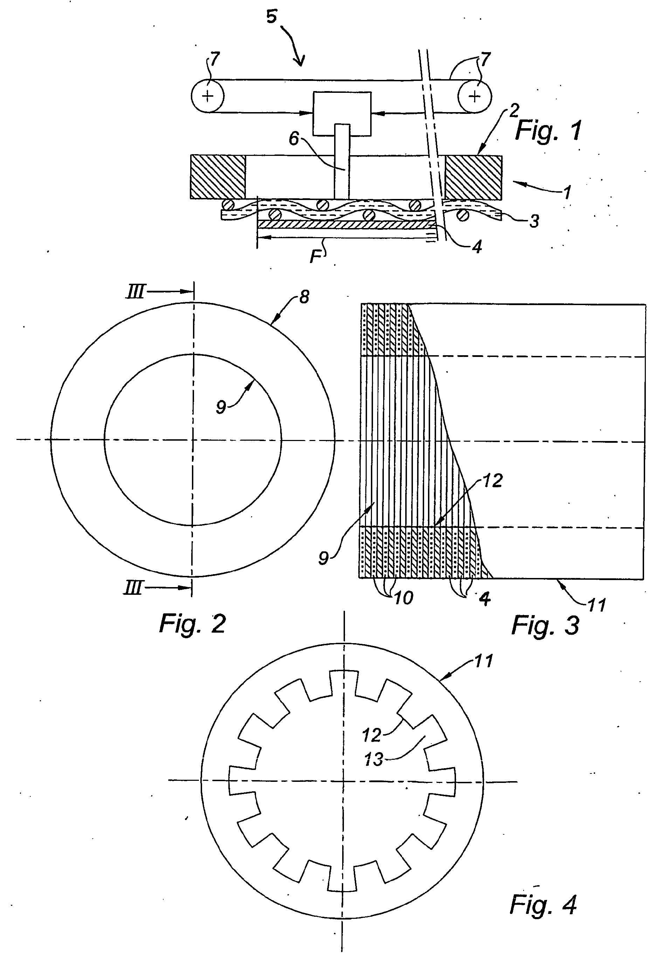

Cette opération peut être exécutée par exemple à l'aide de l'appareillage représenté schématiquement sur la figure 1. L'appareillage comprend un tamis 1 formé d'un cadre 2 sur lequel est tendu une toile 3. De préférence, cette toile est réalisée en taffetas avec un maillage (diamètre du fil et nombre de fils par unité de longueur) choisi en fonction des caractéristiques de la colle à déposer et de l'épaisseur de dépôt de celle-ci. La toile à maille taffetas est réalisée de préférence en polyamide ou en polyester. On peut également utiliser un tissu à maille sergé.

Comme il est bien connu dans la technique de la sérigraphie, la toile 3 est rendue imperméable à la colle dans les zones situées en dehors de celle correspondant à la forme de la tôle 4 sur laquelle on doit effectuer le dépôt. Sur la figure 1, la zone perméable de la toile 3 est indiquée par la flèche F (Il est à noter que pour simplifier la figure 1, on n'a représenté la surface entière ni du tamis 1, ni de la tôle 4). Pendant l'opération de sérigraphie, la tôle 4 est maintenue appliquée contre la toile 3, comme représenté sur la figure 1.

L'appareillage de sérigraphie comprend également un dispositif de raclage 5 connu en soi et dont le racleur 6 s'étend sur l'une des dimensions de la toile 3 et est déplaçable le long de l'autre dimension de celle-ci à l'aide d'un mécanisme représenté schématiquement en 7.

L'adhésif pouvant être utilisé pour l'enduction par sérigraphie des tôles est une colle structurale thermodurcissable de viscosité moyenne à haute, le terme "structural" signifiant ici qu'après fabrication du circuit magnétique la colle et les tôles forment un ensemble parfaitement monobloc d'une structure unie et rigide. La résine peut être une résine polyuréthane, une résine époxy, ou une résine acrylique.

La viscosité de la colle est choisie dans une gamme allant de 4000 à 400 000 mPa.s, de préférence dans une gamme allant de 75 000 à 100 000 mPa.s, une valeur préférentielle étant de 80 000 mPa.s.

L'épaisseur d'enduction des tôles 4 est choisie dans une gamme allant de 1 à 100 µm, de préférence de 5 à 10 µm, une valeur préférée étant de 8 µm.

A titre d'exemple uniquement, on peut noter que les colles de la marque Loctite® 686, ou encore de la marque Araldite® de type AW136 avec un durcisseur de type HV998, ont été utilisées avec succès pour l'enduction des tôles 4.

La colle ou ses composants sont dégazés avant d'être utilisés dans l'appareillage de sérigraphie afin d'en retirer l'air et l'humidité. Un premier dégazage peut être effectué à 2 mbar par exemple. Puis les composants sont dosés, mélangés et dégazés de nouveau jusqu'à 20 mbar. Chaque tôle 4 est alors disposée sous le tamis de sérigraphie 1 pour être enduite. De préférence, l'appareillage 5 effectue plusieurs passes de raclage pour forcer la colle à passer au travers de la toile 3.

L'étape suivante du procédé selon l'invention consiste à empiler les tôles enduites de colle comme indiquée précédemment, dans un outillage adapté pour être placé dans une presse, le nombre de tôles empilées dans l'outillage étant choisi en fonction de la longueur axiale du stator à obtenir. Avantageusement, dès après enduction, les tôles sont transférées immédiatement dans l'outillage de la presse.

Pendant l'empilage, il est avantageux de veiller à ce que l'orientation des fibres du matériau ferromagnétique de chaque tôle ne soit pas la même d'une tôle à l'autre. Par exemple, on peut effectuer un décalage angulaire de 30° toujours dans le même sens, par rapport à la précédente lorsqu'une tôle donnée est disposée dans l'outillage. De telle sorte, il est possible d'obtenir un circuit magnétique présentant la meilleure isotropie radiale possible, dont les caractéristiques magnétiques et mécaniques sont identiques quelle que soit la direction considérée.

Les paramètres de compression de l'empilage tels que la pression, la température et le temps sont choisis en particulier en fonction du type de colle utilisé et des dimensions de l'empilage. Pour limiter les efforts de compression, il est avantageux de donner aux tôles une forme globale qui se rapproche le plus possible de la forme finale, car ces efforts doivent être d'autant plus importants que l'aire de l'empilage sur laquelle sont exercés les efforts est importante. Les paramètres de l'opération de polymérisation de l'empilage comme la température, la pression et le temps sont choisis en accord avec la fiche technique de la colle.

Les paramètres de pressage peuvent être les suivants :
Pression : de 1 à30 MPa, une valeur pratique étant de 13 MPa ;
Température : de 20 à 150 °C, une valeur pratique étant de 120 °C ;
Temps de compression : de 1 minutes à 60 de minutes, une valeur pratique étant de 5 minutes.

Après l'opération de compression, on obtient une ébauche de circuit magnétique feuilleté dont la forme correspond à celle représentée sur les figures 2 et 3. Dans le cas d'un stator correspondant à l'exemple décrit, il s'agit d'une pièce tubulaire 8 de section circulaire et présentant un alésage 9 également de section circulaire. Elle est formée d'une succession de couches alternées formées de tôles 4 et de couches de colle polymérisée 10 constituant un ensemble monobloc rigide dont la précision de l'épaisseur et de la planéité dépendent à la fois du nombre de tôles empilées, de l'épaisseur des tôles, de l'épaisseur des films de colle ainsi que de l'effort de pressage.

L'ébauche ainsi obtenue peut ensuite être soumise à des opérations d'usinage afin de lui donner la forme et les dimensions nominales. Avantageusement, ces opérations consistent à soumettre l'ébauche à l'électroérosion filaire.

Ce procédé particulier d'électroérosion consiste à produire des décharges électriques du type condensateur entre une électrode filaire et une pièce à usiner.

L'électrode n'entre jamais en contact avec les pièces à usiner, et ce sont les décharges qui engendrent des micro plasmas qui localement sont à plusieurs milliers de degrés (environ 10 000 °C) qui évaporent les matériaux métalliques.

Selon une caractéristique avantageuse de l'invention, les surfaces à usiner de l'ébauche sont revêtues d'une résine conductrice de l'électricité, par exemple une résine chargée d'argent. Une résine particulièrement appropriée à cet effet et la résine fabriquée par Elecoproduit® sous la marque Elecolit® 340 La résine conductrice permet l'obtention de surfaces équipotentielles pour toutes les tôles 4, permettant ainsi le travail du fil d'électroérosion.

Dans le cas de l'ébauche de la figure 3, cette enduction est réalisée sur la surface extérieure 11 et la surface intérieure 12 délimitant l'alésage 9.

Dans l'ordre, il est alors procédé à l'usinage des encoches 13 (figure 4) et des surfaces 11 et 12 pour les porter à leur dimension nominale.

Le procédé de l'invention présente de nombreux avantages.

Tout d'abord, l'étape de sérigraphie permet de mettre en oeuvre des colles de moyenne à haute viscosité ce qui réduit les risques de manques localisés de colle et de présence de bulles de gaz sur la surface des tôles. Ce procédé autorise également un contrôle parfait de la quantité de colle déposée et donc de l'épaisseur d'enduction de chaque tôle de l'empilage. Par ailleurs, la maîtrise de l'épaisseur de colle et de l'effort de pressage permet de déterminer avec précision la dimension axiale finale de l'empilage après compression. Il s'est avéré que la proportion fer/isolant du circuit magnétique peut être meilleure que 90%, une valeur de 97,5 % pouvant être obtenue dans certains cas.

On peut également observer qu'après compression de l'empilage et polymérisation de la colle, l'empilage présente une cohésion et une rigidité telles que l'usinage subséquent n'en provoque aucune délamination. Cet usinage ne se faisant pas sur chaque tôle séparément, il est possible de s'affranchir des disparités dimensionnelles tant des tôles elles-mêmes que de l'empilage risquant d'apparaître si les tôles étaient usinées individuellement. Par ailleurs, l'électroérosion permet de conférer à l'empilage les dimensions requises avec une très bonne précision.

La cohésion et la rigidité mécanique du circuit magnétique finalement obtenues évitent également toute déformation du circuit magnétique dans la machine qui en est équipée ce qui permet d'en réduire les dimensions, d'en prolonger la durée de vie et d'en augmenter les performances.

Le procédé de l'invention peut être appliqué pour la fabrication de moteurs, de générateurs, de transformateurs et d'électro-aimant et d'appareils analogues légers peu encombrants utilisables notamment dans le domaine spatial, aéronautique, automobile, ferroviaire etc.

### Exemple

L'exemple suivant, est destiné uniquement à illustrer le procédé de l'invention sans être en aucune manière limitatif de celle-ci.

On prépare une pluralité de tôles d'une épaisseur de 200 microns en les estampant dans un matériau en feuille ferromagnétique de type Fe-Ni. Le circuit magnétique à obtenir étant destiné à former le stator d'un moteur électrique, les tôles ont une forme annulaire dont le diamètre extérieur est légèrement supérieur et dont le diamètre intérieur est légèrement inférieur aux diamètres nominaux correspondants que doit présenter le circuit fini devant être fabriqué. Les feuilles n'ont pas encore les encoches destinées à recevoir le bobinage du stator. Leur surface équivaut à 17 500 mm².

Chacune des feuilles de tôle est ensuite revêtue d'une couche d'adhésif d'une épaisseur de 8 µm. La couche d'adhésif est déposée par sérigraphie à l'aide d'un appareillage analogue à celui représenté sur la figure 1. Le tamis de sérigraphie comporte une toile en taffetas dont le fil présente un diamètre de 30 µm avec une densité de fil de 200 fils par cm.

L'adhésif est une résine d'Araldite® du type AW136 mélangé à un durcisseur de type HV998. L'opération de sérigraphie est effectuée à température ambiante.

Les tôles revêtues de colle, en nombre suffisant pour constituer l'ensemble de l'empilage du circuit magnétique futur, sont déposées dans un outillage qui est ensuite mis sous presse. Celle-ci est actionnée pour comprimer l'empilage sous une pression de 13 MPa, à une température de 120° pendant 5 minutes. En sortant de presse, l'adhésif est entièrement polymérisé, l'empilage formant une unité parfaitement monobloc.

On procède ensuite au revêtement des surfaces cylindriques de l'empilage avec une résine époxy conductrice de l'électricité telle que la résine du type Elecolit® 340.

L'empilage ainsi revêtu est alors usiné par électroérosion, opération pendant laquelle les diamètres intérieur et extérieur de l'empilage sont portés à leurs valeurs nominales et les encoches sont ménagées à l'intérieur du passage de l'empilage.

Le circuit magnétique obtenu présente une proportion fer/isolant de 97,5% et une excellente résistance à la délamination.

## Revendications

1. Procédé de fabrication d'un circuit magnétique feuilleté, que ce soit pour des stators et rotors de machines tournantes (moteurs, alternateurs, génératrices etc.), ou pour des transformateurs, des électro-aimants et autres appareillages analogues, composé d'un empilage de tôles (4) en un matériau ferromagnétique, consistant :
à enduire d'un adhésif au moins une face de chacune desdites tôles (4),
à empiler lesdites tôles enduites,
à comprimer l'empilage ainsi obtenu en faisant durcir ledit adhésif, et
à usiner par électroérosion ledit empilage de tôles jusqu'à obtention de la forme et des dimensions nominales du circuit magnétique final,
**caractérisé en ce qu'**on enduit lesdites tôles (4) par sérigraphie avec une couche d'un adhésif d'une viscosité située entre 4000 mPa.s et 400 000 mPa.s et de préférence entre 18 000 mPa.s et 150 000 mPa.s et d'une épaisseur choisie entre 1 et 100 µm et de préférence entre 5 et 10 µm.

2. Procédé de fabrication selon la revendication 1, **caractérisé en ce que** l'opération de sérigraphie est exécutée à travers une toile (3) en taffetas ou en sergé.

3. Procédé de fabrication selon la revendication 2, **caractérisé en ce que** ladite toile (3) présente un diamètre de fil allant de 30 à 250 µm et une densité de fil allant de 10 à 220 fils par cm.

4. Procédé de fabrication selon l'une quelconque des revendications 1 à 3, **caractérisé en ce que** ladite électroérosion est filaire.

5. Procédé de fabrication selon l'une quelconque des revendications 1 à 4, **caractérisé en ce que**, préalablement à l'opération d'usinage par électroérosion, les surfaces dudit empilage à usiner sont recouvertes d'une résine conductrice de l'électricité.

6. Procédé de fabrication selon la revendication 5, **caractérisé en ce que** ladite résine conductrice de l'électricité est une résine époxy ou une résine acrylique.

7. Procédé de fabrication selon l'une quelconque des revendications précédentes, **caractérisé en ce que** l'adhésif est une résine thermodurcissable telle qu'une résine polyuréthane, une résine époxy ou une résine acrylique.

8. Procédé de fabrication selon l'une quelconque des revendications précédentes, **caractérisé en ce qu'**après l'opération d'enduction, l'empilage des tôles (4) enduites est effectué en les plaçant les unes sur les autres de manière que les fibres du matériau ferromagnétique soient orientées de façon décalée d'une tôle à la suivante et que l'empilage présente la meilleure isotropie radiale possible.

9. Procédé de fabrication selon l'une quelconque des revendications précédentes, **caractérisé en ce que**, pendant l'opération de compression, ledit empilage est soumis à une pression choisie entre 1 MPa et 30 MPa et de préférence entre 5 MPa et 15 MPa.

10. Procédé de fabrication selon l'une quelconque des revendications 1 à 9, **caractérisé en ce que**, pendant l'opération de compression, ledit empilage est soumis à une température choisie entre 20 °C et 150 °C, et de préférence entre 50 °C et 100 °C.

11. Procédé de fabrication selon l'une quelconque des revendications précédentes, **caractérisé en ce que**, pendant l'opération de compression, la pression est maintenue pendant un temps choisi entre 1 minutes et 60 minutes et de préférence entre 5 minutes et 30 minutes.

12. Procédé de fabrication selon l'une quelconque des revendications précédentes, **caractérisé en ce qu'**avant l'opération d'enduction, lesdites tôles (4) sont conformées de manière à présenter des dimensions globales proches de celles qu'elles auront dans le circuit magnétique final.

## Claims

1. A method of making a laminated magnetic circuit, such as for stators and rotors of rotating machines (motors, alternators, generators etc.), or for transformers, electromagnets and other similar apparatus, comprising a stack of sheets (4) of a ferromagnetic material, comprising:
coating at least one face of each of the said sheets (4) with an adhesive,
stacking the said coated sheets,
compressing the stack thus obtained to harden the said adhesive, and
processing the said stack of sheets by electroerosion machining to obtain the shape and the nominal dimensions of the final magnetic circuit,
**characterised in that** the said sheets (4) are coated by silkscreen with a layer of an adhesive having a viscosity between 4000 mPa.s and 400,000 mPa.s and preferably between 18,000 mPa.s and 150,000 mPa.s and of a thickness chosen between 1 and 100 µm and preferably between 5 and 10 µm.

2. A method according to claim 1, **characterised in that** the silkscreen operation is performed through a cloth (3) of taffeta or twill.

3. A method according to claim 2, **characterised in that** the said cloth (3) has a thread diameter from 30 to 250 µm and a thread density from 10 to 220 threads per centimetre.

4. A method according to one of claims 1 to 3, **characterised in that** the electroerosion machining is by wire.

5. A method according to one of claims 1 to 4, **characterised in that**, before the electroerosion machining operation, the surfaces of the said stack to be processed are covered by a resin which conducts electricity.

6. A method according to claim 5, **characterised in that** the said electricity-conducting resin is an epoxy resin or an acrylic resin.

7. A method according to one of the preceding claims, **characterised in that** the adhesive is a thermosetting resin such as a polyurethane resin, an epoxy resin or an acrylic resin

8. A method according to one of the preceding claims, **characterised in that**, after the coating operation the stacking of the coated sheets (4) is performed by placing them one on the other such that the orientation of the fibres of the ferromagnetic material is staggered from one sheet to the next such that the stack has the best possible radial isotropy.

9. A method according to one of the preceding claims, **characterised in that**, during the compression operation, the said stack is subjected to a pressure chosen between 1 MPa and 30 MPa and preferably between 5 MPa and 15 MPa.

10. A method according to any one of claims 1 to 9, **characterised in that**, during the compression operation, the said stack is subjected to a temperature between 20°C and 150°C, and preferably between 50° C and 100° C.

11. A method according to one of the preceding claims, **characterised in that**, during the compression operation, the pressure is maintained for a time chosen between 1 minute and 60 minutes, and preferably between 5 minutes and 30 minutes.

12. A method according to one of the preceding claims, **characterised in that** before the coating operation, the said sheets (4) are shaped to have overall dimensions close to those they will have in the final magnetic circuit.

## Patentansprüche

1. Verfahren zur Herstellung einer geschichteten MagnetSchaltung für Statoren und Rotoren von Drehmaschinen (Motoren, Wechselstromgeneratoren, Generatoren, usw.) oder für Transformatoren, Elektromagneten und andere derartige Geräte, bestehend aus einer Stapelung von Blechen (4) aus einem ferromagnetischen Material, darin bestehend:
mindestens eine Fläche jedes der Bleche (4) mit einem Haftmittel zu überziehen,
die überzogenen Bleche zu stapeln,
den so erhaltenen Stapel durch Härtern des Haftmittels zu komprimieren, und
durch Elektroerosion den Blechstapel zu bearbeiten, bis die Nominalform und -abmessungen der endgültigen Magnetschaltung erhalten werden,
**dadurch gekennzeichnet, dass** die Bleche (4) durch Serigraphie mit einer Schicht eines Haftmittels mit einer Viskosität zwischen 4000 mPa.s und 400 000 mPa.s und vorzugsweise zwischen 18 000 mPa.s und 150 000 mPa.s und einer gewählten Dicke zwischen 1 und 100 µm und vorzugsweise zwischen 5 und 10 µm überzogen werden.

2. Herstellungsverfahren nach Anspruch 1, **dadurch gekennzeichnet, dass** das Serigraphieverfahren über ein Gewerbe (3) aus Taft oder Köper.

3. Herstellungsverfahren nach Anspruch 2, **dadurch gekennzeichnet, dass** das Gewebe (3) einen Fadendurchmesser von 30 bis 250 µm und eine Fadendichte von 10 bis 220 Fäden pro cm aufweist.

4. Herstellungsverfahren nach einem der Ansprüche 1 bis 3, **dadurch gekennzeichnet, dass** die Elektroerosion den Faden betrifft.

5. Herstellungsverfahren nach einem der Ansprüche 1 bis 4, **dadurch gekennzeichnet, dass** vor dem Bearbeitungsverfahren durch Elektroerosion die Oberflächen des zu bearbeitenden Stapels mit einem elektrisch leitenden Harz überzogen werden.

6. Herstellungsverfahren nach Anspruch 5, **dadurch gekennzeichnet, dass** das elektrisch leitende Harz ein Epoxyharz oder ein Acrylharz ist.

7. Herstellungsverfahren nach einem der vorhergehenden Ansprüche, **dadurch gekennzeichnet, dass** das Haftmittel ein duroplastisches Harz, wie beispielsweise ein Polyurethanharz, ein Epoxyharz oder ein Acrylharz ist.

8. Herstellungsverfahren nach einem der vorergehenden Ansprüche, **dadurch gekennzeichnet, dass** nach dem verfahren des Überziehens das Stapeln der überzogenen Bleche (4) erfolgt, indem sie übereinander angeordnet werden, so dass die fasern des ferromagnetischen Materials von einem Blech zum nächsten versetzt augerichtet sind und der Stapel die bestmögliche radiale Isotropie aufweist.

9. Herstellungsverfahren nach einem der vorhergehenden Ansprüche, **dadurch gekennzeichnet, dass** während des Kompressionsverfahrens der Stapel einem Druck zwischen 1 MPa und 30 MPa und vorzugsweise zwischen 5 MPa und 15 MPa ausgesetzt wird.

10. Herstellungsverfahren nach einem der Ansprüche 1 bis 9, **dadurch gekennzeichnet, dass** während des Kompressionsverfahrens der Stapel einer Temperatur zwischen 20 °C und 150 °C und vorzugsweise zwischen 50 °C und 100 °C ausgesetzt wird.

11. Herstellungsverfahren nach einem der vorhergehenden Ansprüche, **dadurch gekennzeichnet, dass** während des Kompressionsverfahrens der Druck während einer Zeit zwischen 1 Minute und 60 Minuten und vorzugsweise zwischen 5 Minuten und 30 Minuten aufrechterhalten wird.

12. Herstellungsverfahren nach einem der vorergehenden Ansprüche, **dadurch gekennzeichnet, dass** vor dem Vorgang des Überziehens die Bleche (4) derart ausgeführt werden, dass sie Gesamtabmessungen nahe jenen aufweisen, die sie in der endgültigen Magnetschaltung haben werden.
